(19) Europäisches Patentamt
European Patent Office
Office européen des brevets

(11) **EP 2 070 179 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(21) Anmeldenummer: **07801873.6**

(22) Anmeldetag: **24.08.2007**

(51) Int Cl.:
*H02J 9/06* (2006.01)   *H02J 1/10* (2006.01)

(86) Internationale Anmeldenummer:
**PCT/EP2007/007445**

(87) Internationale Veröffentlichungsnummer:
**WO 2008/025490 (06.03.2008 Gazette 2008/10)**

(54) **REDUNDANTE STROMVERSORGUNG MIT DIAGNOSEFÄHIGKEIT UND SCHUTZBESCHALTUNG**

REDUNDANT CURRENT SUPPLY WITH DIAGNOSTIC CAPABILITY AND A SUPPRESSOR

ALIMENTATION ÉLECTRIQUE REDONDANTE AYANT UNE CAPACITÉ DE DIAGNOSTIC ET COMPORTANT UN CIRCUIT DE PROTECTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.08.2006 DE 102006040753**

(43) Veröffentlichungstag der Anmeldung:
**17.06.2009 Patentblatt 2009/25**

(73) Patentinhaber: **KNORR-BREMSE Systeme für Nutzfahrzeuge GmbH 80809 München (DE)**

(72) Erfinder:
• GSCHEIDLE, Wolfgang
71720 Oberstenfeld (DE)
• RIMPEL, Michael
71701 Schwieberdingen (DE)
• HÄFELE, Klaus
71576 Burgstetten (DE)

(74) Vertreter: **Schönmann, Kurt et al Knorr-Bremse, Moosacher Strasse 80 80809 München (DE)**

(56) Entgegenhaltungen:
**US-A1- 2002 113 494    US-A1- 2002 125 865**

• SHI F ET AL: "Integrated power systems with fault tolerant attributes" APPLIED POWER ELECTRONICS CONFERENCE AND EXPOSITION, 1997. APEC '97 CONFERENCE PROCEEDINGS 1997., TWELFTH ANNUAL ATLANTA, GA, USA 23-27 FEB. 1997, NEW YORK, NY, USA,IEEE, US, Bd. 1, 23. Februar 1997 (1997-02-23), Seiten 443-447, XP010215855 ISBN: 0-7803-3704-2**

**Beschreibung**

Die Erfindung betrifft sicherheitsrelevante Systeme in Kraftfahrzeugen und bezieht sich insbesondere auf eine redundante Stromversorgung, die eine Diagnosefähigkeit und eine Schutzbeschaltung zur Verbesserung der Verfügbarkeit solcher sicherheitsrelevanten Systeme aufweist. Der Artikel von Shi et al: "Integrated power systems with fault tolerant attributes" APEC'97 zeigt eine Schaltungsanordnung gemäss dem Obenbegriff des Anspruchs 1 und ein Verfahren gemäss dem Obenbegriff des Anspruchs 8. Wichtige und/oder sicherheitsrelevante Systeme im Kraftfahrzeugbereich, beispielsweise elektronische Bremssysteme oder Getriebeschaltsysteme in den Bereichen der Personenkraftwagen und der Nutzfahrzeuge, müssen mit höchster Verfügbarkeit bereitgestellt sein, um bei einem Ausfall oder einem anderweitigen Fehlerfall etwa eine Notlauffähigkeit eines Kraftfahrzeugs sicherstellen zu können. Daher wird bei solchen Systemen unter anderem für deren Stromversorgung eine Redundanz derart gefordert, dass die Stromversorgung über zumindest zwei getrennte, voneinander unabhängige Pfade geführt wird und bei einem Ausfall eines Pfades eine unterbrechungsfreie Versorgung einer elektronischen Steuereinheit gewährleistet sowie eine Erkennung und eine Anzeige dieses Ausfalls möglich ist. Bei bekannten Anordnungen wird dies durch Entkoppeln der beiden Pfade über umschaltbare Leitungen mittels beispielsweise Relaiskontakten, Dioden und Transistoren erreicht.

Bei einer derartigen Entkopplung tritt jedoch an beteiligten Diodenelementen eine Verlustleistung auf, die von der Flussspannung der Diode und dem durch die Diode fließenden Laststrom bestimmt wird. Zudem besteht die Möglichkeit, dass nach einem Umschaltvorgang der gesamte Laststrom sofort durch den noch intakten Strompfad fließt und sich nicht mehr - idealer Weise im Verhältnis 1:1 - auf die zumindest zwei vorhandenen, gleichwertigen Stromversorgungszweige aufteilt. Dies kann zum Auftreten starker Spitzenleistungen in den Dioden und infolge dessen zu einer Zerstörung der Dioden führen.

Insbesondere bei Systemen mit hoher Stromaufnahme, wie beispielsweise Getriebestellern, und/oder hohen Betriebstemperaturen müssen daher die in zur Entkopplung verwendeten Halbleiter-Schaltelementen auftretenden Verlustleistungen minimiert werden, um die maximal zulässige Betriebstemperatur der Halbleiter-Schaltelemente nicht zu überschreiten und dadurch deren Lebensdauer nicht zu verringern.

Der Erfindung liegt daher die Aufgabe zugrunde, eine redundante Stromversorgung für sicherheitsrelevante Systeme in Kraftfahrzeugen zu schaffen, welche in Halbleiter-Schaltelementen auftretende Verlustleistungen minimiert und die in diesen auftretende Spitzenleistungen begrenzt.

Erfindungsgemäß wird diese Aufgabe durch die Merkmale des Patentanspruchs 1 sowie durch die Merkmale des Patentanspruchs 8 gelöst. Vorteilhafte Weiterbildungen der Erfindung sind Gegenstand der beigefügten Unteransprüche.

Die Erfindung wird nachstehend anhand eines bevorzugten Ausführungsbeispiels unter Bezugnahme auf die Zeichnung näher beschrieben. Es zeigen:

Fig. 1 eine vereinfachte Blockdarstellung einer Stromversorgung mit Stromüberwachung und Abschaltung gemäß einem bevorzugten Ausführungsbeispiel einer redundanten Stromversorgung mit Diagnosefähigkeit und Schutzbeschaltung; und

Fig. 2 eine prinzipielle Schaltungsanordnung der redundanten Stromversorgung gemäß Fig. 1.

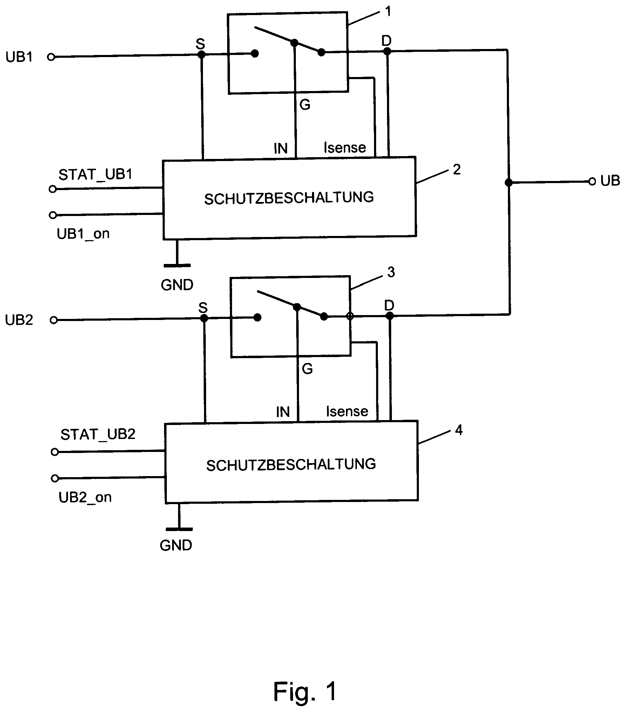

Fig. 1 zeigt eine vereinfachte Blockdarstellung einer Stromversorgung mit Stromüberwachung und Abschaltung gemäß einem bevorzugten Ausführungsbeispiel einer redundanten Stromversorgung mit Diagnosefähigkeit und Schutzbeschaltung.

Im Einzelnen sind in Fig. 1 ein erster, oberer Stromzweig bzw. Strompfad mit einer Eingangsleitung auf dem Potenzial einer Batteriespannung UB1, einem Schaltelement 1 in der Eingangsleitung und einer parallel zu der Eingangsleitung verschalteten Schutzbeschaltung 2, ein zweiter, unterer Stromzweig mit einer Eingangsleitung auf dem Potenzial einer Batteriespannung UB2, einem Schaltelement 3 in der Eingangsleitung und einer parallel zu der Eingangsleitung verschalteten Schutzbeschaltung 4, und eine gemeinsame Ausgangsleitung auf dem Potenzial einer Batteriespannung UB als einer Versorgungsspannung für eine nachgeschaltete (nicht gezeigte) elektronische Steuereinheit dargestellt.

Die Schaltelemente 1 und 3 sind bevorzugt Halbleiter-Schaltelemente (Leistungshalbleiter).

Die Schutzbeschaltungen 2 und 4 weisen jeweils einen ersten Eingang, der mit einem Source-Anschluss jeweils des Schaltelements 1 bzw. 3 verbunden ist, einen zweiten Eingang, der mit einem Drain-Anschluss jeweils des Schaltelements 1 bzw. 3 verbunden ist, einen dritten Eingang (Isense) zur Erfassung eines jeweils in dem Schaltelement 1 bzw. 3 erzeugten Stroms, einen vierten Eingang, der als Schaltsignaleingang für Schaltsignale (UB1_on, UB2_on) mit zwei logischen Zuständen bzw. Signalpegeln 0 und 1 dient, einen Ausgang (IN), der als schaltend steuernder Eingang für jeweils die Schaltelemente 1 bzw. 3 dient, einen zweiten Ausgang (STAT_UB1, STAT_UB2), an dem ein Rückmeldesignal mit zwei logischen Zuständen bzw. Signalpegeln 0 und 1 ausgegeben wird, und einen auf Massepotenzial (GND) liegenden Anschluss auf.

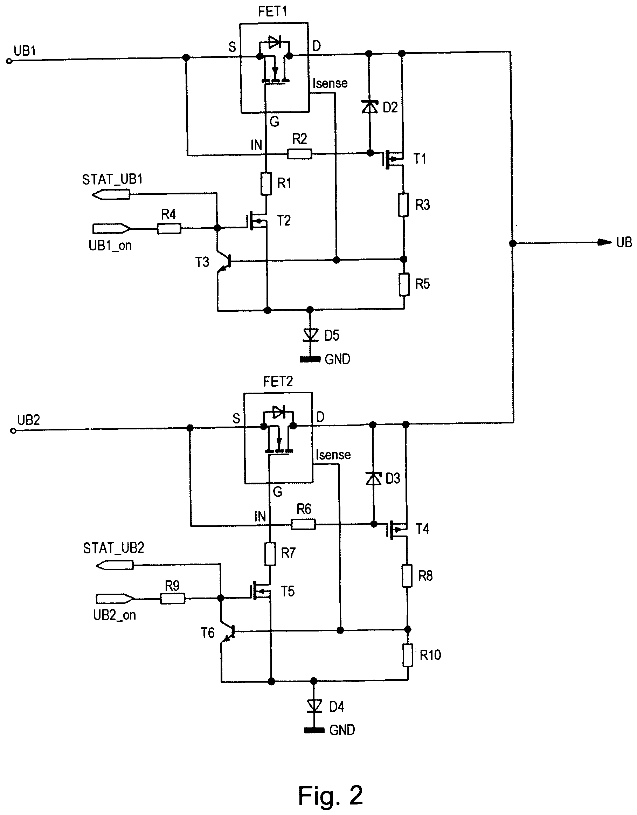

Fig. 2 zeigt im Einzelnen eine prinzipielle Schaltungsanordnung der redundanten Stromversorgung gemäß Fig. 1.

In Fig. 2 sind zwei gleich aufgebaute Stromversorgungszweige dargestellt, an welchen über Eingangs- bzw. Zuleitungen jeweils Eingangsspannungen (Batteriespannungen) UB1 für den ersten, oberen Zweig und UB2 für den zweiten, unteren Zweig anliegen und entsprechende Eingangsströme zugeführt werden. An einem gemeinsamen Ausgang der beiden Zweige wird die Versorgungsspannung UB (Batteriespannung) ausgegeben, die einer nachgeschalteten, zu versorgenden Einrichtung (nicht gezeigt), beispielsweise einer elektronischen Steuereinheit oder einem Stellglied, zugeführt wird.

Nachstehend wird die Schaltungsanordnung des ersten, oberen Stromversorgungszweigs im Einzelnen beschrieben.

Der erste, obere Stromversorgungszweig umfasst im Wesentlichen einen als Schaltelement dienenden Feldeffekttransistor FET1, beispielsweise einen selbstsperrenden n-MOSFET mit einem Source-Anschluss S, einem Drain-Anschluss D, einem Gate-Anschluss G (IN) und einem Ausgangsanschluss Isense, eine Zenerdiode D2, eine Diode D5, einen Feldeffekttransistor T1, beispielsweise einen selbstsperrenden p-MOSFET, einen Feldeffekttransistor T2, beispielsweise einen selbstsperrenden n-MOSFET, einen Bipolartransistor T3, beispielsweise einen npn-Transistor in Emitterschaltung, Widerstände R1, R2, R3, R4 und R5, einen Signalausgang STAT_UB1, und einen Signaleingang UB1_on.

In dem oberen Stromversorgungszweig ist der Source-Anschluss S des Feldeffekttransistors FET1 mit der die Batteriespannung UB1 führenden Leitung verbunden und liefert an seinem Drain-Anschluss D die Batteriespannung UB für die nachgeschaltete, zu versorgende Einrichtung. Der Widerstand R2 ist an einem seiner Enden mit dem Source-Anschluss S des Feldeffekttransistors FET1 und an dem anderen seiner Enden mit dem Gate-Anschluss G des Feldeffekttransistors T1 und der Anode der Zenerdiode D2 verbunden. Die Kathode der Zenerdiode D2 ist mit dem Drain-Anschluss D des Feldeffekttransistors FET1 verbunden, wobei die Zenerdiode D2 zwischen dem Drain-Anschluss D des Feldeffekttransistors FET1 und dem Widerstand R2 in Sperrrichtung gepolt ist. Der Source-Anschluss S des Feldeffekttransistors T1 ist mit dem Drain-Anschluss D des Feldeffekttransistors FET1 verbunden, und der Drain-Anschluss D des Feldeffekttransistors T1 ist mit einem Ende des Widerstands R3 verbunden, dessen anderes Ende wiederum mit dem Widerstand R5 verschaltet und gleichzeitig zu dem Basisanschluss des Bipolartransistors T3 geführt ist. Das andere Ende des Widerstands R5 ist mit dem Emitter des Bipolartransistors T3 und einem Ende der Diode D5 verbunden, welche somit ebenfalls mit dem Emitter des Bipolartransistors T3 verschaltet und im Übrigen in Durchlassrichtung zu einer Masse (GND) des Kraftfahrzeugs hin angeordnet ist. Der Kollektoranschluss des Bipolartransistors T3 ist mit einem Ende des Widerstands R4, an dessen anderem Ende ein Einschaltsignal UB1_on zugeführt wird, und dem Gate-Anschluss G des Feldeffekttransistors T2 verbunden und ferner zu dem Signalausgang STAT_UB1 geführt. Der Source-Anschluss S des Feldeffekttransistors T2 ist mit dem Emitter des Bipolartransistors T3, der Diode D5 und dem Widerstand R5 verbunden, und der Drain-Anschluss D des Feldeffekttransistors T2 ist über den Widerstand R1 an den Gate-Anschluss G (IN) des Feldeffekttransistors FET1 geführt. Ein Ausgangsanschluss (Ausgangspin) Isense des Feldeffekttransistors FET1 führt schließlich zu dem Basisanschluss des Bipolartransistors T3 und zwischen die Widerstände R3 und R5.

Der hinsichtlich seiner Elemente identisch aufgebaute zweite, untere Stromzweig umfasst im Wesentlichen einen als Schaltelement dienenden Feldeffekttransistor FET2, beispielsweise einen selbstsperrenden n-MOSFET mit einem Source-Anschluss S, einem Drain-Anschluss D, einem Gate-Anschluss G (IN) und einem Anschluss Isense, eine Zenerdiode D3, eine Diode D4, einen Feldeffekttransistor T4, beispielsweise einen selbstsperrenden p-MOSFET, einen Feldeffekttransistor T5, beispielsweise einen selbstsperrenden n-MOSFET, einen Bipolartransistor T6, beispielsweise einen npn-Transistor in Emitterschaltung, Widerstände R6, R7, R8, R9 und R10, einen Signalausgang STAT_UB2, und einen Signaleingang UB2_on.

Wie Fig. 2 entnehmbar ist, entsprechen die einzelnen Elemente des zweiten, unteren Stromzweigs in ihrer Art, Anordnung und Funktion denjenigen des ersten, oberen Stromzweigs, so dass ihre grundlegende Verschaltung nicht erneut beschrieben wird.

Es wird angemerkt, dass für die Transistoren T1, T2, T4 und T5 auch Bipolartransistoren, für die Transistoren T3 und T6 auch n-MOSFETs, und für die Feldeffekttransistoren FET1 und FET2 auch p-MOSFETs Verwendung finden können.

Nachstehend wird nun die Funktionsweise der aus dem oberen und dem unteren Stromzweig bestehenden gesamten Schaltungsanordnung zur Umschaltung der Batteriespannungen UB1, UB2 und somit der Stromversorgung für die nachgeschaltete Einrichtung zwischen diesen beiden Zweigen beschrieben.

Zunächst erfolgt die Stromversorgung der Schaltungsanordnung über die beiden Eingangsleitungen UB1 (oberer Zweig) und UB2 (unterer Zweig).

Die beiden Feldeffekttransistoren FET1 und FET2, welche beispielsweise integriert sein können und Halbleiterschalter zum Schalten der Eingangsspannungen UB1 und UB2 bilden, sind invers zu ihrer eigentlichen Einbaurichtung angeordnet, so dass auch in einem Zustand, in dem die Feldeffekttransistoren FET1 und FET2 nicht ein- bzw. zugeschaltet sind, deren in der Fig. 2 dargestellte interne Inversdioden leitend sind und die Versorgungsspannung UB durch sowohl die Eingangsspannung UB1 als auch die Eingangsspannung UB2 zulassen. Gleichzeitig sind in diesem Zustand beide Eingangsspannungen UB1 und UB2 von einander entkoppelt, da sich in einem Fehlerfall ein Schluss von entweder der Eingangsspannung UB1 oder der Eingangsspannung UB2 zur Masse (GND) nicht auf die jeweils andere, noch intakte Zuleitung auswirkt.

Werden die beiden Feldeffekttransistoren FET1 und FET2 über den Eingang UB1_on, den Widerstand R4, den Feldeffekttransistor T2 und den Widerstand R1 bzw. den Eingang UB2_on, den Widerstand R9, den Feldeffekttransistor T5 und den Widerstand R7 durch ein Eingangssignal mit einem Signalpegel von UB1_on = logisch 1 und UB2_on = logisch 1 zugeschaltet, und sind die beiden Transistoren T3 und T6 gesperrt, werden die internen Inversdioden der Feldeffekttransistoren FET1 und FET2 durch die intern parallel geschalteten (nicht gezeigten) Drain-Source-Einschaltwiderstände $R_{Dson1}$, $R_{DSon2}$ der Feldeffekttransistoren FET1 und FET2 überbrückt, so dass bei einem aus den Zuleitungen UB1 und UB2 zu dem gemeinsamen Ausgang UB fließenden Strom gemäß

$$P_{Fet} = I_L^2 \times R_{Dson} \qquad (1)$$

nur Verlustleistungen durch die Einschaltwiderstände $R_{Dson1}$, $R_{DSon2}$ der Feldeffekttransistoren FET1 und FET2 entstehen. In diesem Fall fließt dann, wenn beide Zuleitungen UB1 und UB2 identische Daten hinsichtlich beispielsweise der Zuleitungs- und der Kontaktübergangswiderstände aufweisen und somit auch die beiden Eingangsspannungen UB1 und UB2 an jeweiligen Klemmen der elektronischen Steuereinheit exakt gleich sind, über den ersten, oberen Stromzweig und den zweiten, unteren Stromzweig derselbe anteilige Strom.

Dies wird nachstehend anhand eines Beispiels näher erläutert.

Es sei angenommen, dass der Eingang UB1 ein Anschluss (eine Klemme) mit einer höheren Spannung oder einem niedrigeren Innenwiderstand ist, und der Eingang UB2 ein Anschluss mit einer niedrigeren Spannung oder einem höheren Innenwiderstand ist.

In diesem Fall ist, da der Anschluss UB2 gegenüber dem Anschluss UB1 aufgrund beispielsweise hochohmigerer Zuleitungen oder Kontaktübergangswiderstände Unterschiede aufweist, eine exakt gleiche Aufteilung, idealer Weise eine 1:1-Aufteilung, des über die beiden Eingänge UB1 und UB2 zum Ausgang UB fließenden Gesamtstroms nicht mehr gewährleistet.

Daher fließt ein Teil des über den Eingang UB1 mit der höheren Spannung und dem niedrigeren Innenwiderstand und den Feldeffekttransistor FET1 in die Last, d.h. beispielsweise die elektronische Steuereinheit als der nachgeschalteten, zu versorgenden Einheit, fließenden Stroms über den Feldeffekttransistor FET2 des anderen, "schlechteren" Eingangs UB2 wieder aus der Last heraus und bewirkt eine Art Aufladung des schlechteren Eingangs UB2, so dass es in unerwünschter Weise zu einem hohen Querstromfluss durch die beiden Feldeffekttransistoren FET1 und FET2 kommen kann.

In dem vorgenannten Beispiel erzeugt der über den Eingang UB1 zu dem Ausgang UB in die Last hinein fließende Strom an dem Feldeffekttransistor FET1 eine Spannung von

$$U_1 = R_{DSon1} \times I_L \qquad (2),$$

welche an dem Source-Anschluss S des Feldeffekttransistors FET1 gegenüber dem Drain-Anschluss D desselben eine positive Spannung erzeugt und über diese den Transistor T1 sperrt. In diesem Fall ist der an dem Anschluss Isense des Feldeffekttransistor FET1 ausgegebene Strom Null, da die interne Stromquelle des Feldeffekttransistors FET1 nur für den Fall eines Stromflusses von Drain nach Source Strom liefert.

Fließt nun ein Teil dieses Stroms über den Anschluss UB2 wieder aus der Last heraus, entsteht zwischen dem Drain-Anschluss D und dem Source-Anschluss S des Feldeffekttransistors FET2 eine positive Spannung, d.h. das Source-Potenzial ist gegenüber dem Drain-Potenzial negativ, und die interne Stromquelle Isense des Feldeffekttransistors FET2 liefert einen Strom.

Infolge dessen fließt über den Anschluss Isense des Feldeffekttransistors FET2 und den Widerstand R10 ein positiver Strom zur Masse (GND), welcher an dem Widerstand R10 einen entsprechenden Spannungsabfall erzeugt. Wird dieser Spannungsabfall an dem Widerstand R10 größer als die Basis-Emitter-Spannung des Transistors T6, wird Transistor T6 leitend und regelt über den Gate-Anschluss des Feldeffekttransistors T5 den Feldeffekttransistor FET2 ab. T2 und T5 können auch Bipolartransistoren sein.

Dadurch wird FET2 abgeschaltet, wodurch die Spannung am Eingang UB2 nochmals weiter abfällt. Der Einschaltwiderstand $R_{DSon2}$ des Feldeffekttransistors FET2 wird erhöht, d.h. die Stromverteilung zwischen dem ersten, oberen Stromzweig und dem zweiten, unteren Stromzweig ändert sich weiter zugunsten eines höheren Stroms durch den oberen Stromzweig. Wird sodann die Drain-Source-Spannung an dem Feldeffekttransistor FET2 höher als die Schwellenspannung des selbstsperrenden (Feldeffekt-) Transistors T4, wird dieser leitend und bewirkt eine zusätzliche Mitkopplung der Spannung über den Widerstand R10 und den Bipolartransistor T6.

Schließlich schaltet der Bipolartransistor T6 über den Feldeffekttransistor T5 den Feldeffekttransistor FET2 vollständig ab, so dass ein Strom nicht mehr über den Feldeffekttransistor FET2 abfließt, sondern nur noch von dem Eingang UB1 zu dem Ausgang UB, d.h. ausschließlich über den ersten, oberen Stromzweig der Schaltungsanordnung fließt.

In diesem Zustand kann, da der (Bipolar-) Transistor T6 leitend ist, der abgeschaltete Zustand des Feldeffekttransistors FET2 über eine Rückmeldung am Anschluss STAT_UB2 von einem ansteuernden Mikroprozessor der elektronischen Steuereinheit erfasst werden. Im Einzelnen steuert hierbei der Mikroprozessor den Eingang UB2_on mit einem Signalpegel von logisch 1 an und erfasst aufgrund des leitenden Zustands des Bipolartransistors T6 einen Signalpegel von logisch 0 an dem Ausgang STAT_UB2, während im fehlerfreien Zustand STAT_UB2 log. 1 wäre.

Aufgrund des identischen Aufbaus der Schaltungsanordnung in dem oberen und dem unteren Stromzweig ist ohne Weiteres ersichtlich, dass bei inversen Spannungsverhältnissen an den Eingängen UB1 und UB2, d.h. dann, wenn der Eingang UB2 ein Anschluss (eine Klemme) mit einer höheren Spannung oder einem niedrigeren Innenwiderstand ist, und der Eingang UB1 ein Anschluss mit einer niedrigeren Spannung oder einem höheren Innenwiderstand ist, ein entsprechender Betriebsablauf mit Abschaltung des Feldeffekttransistors FET1 und ein Fluss des gesamten Stroms von dem Eingang UB2 über den Feldeffekttransistor FET2 zum Ausgang UB resultiert.

Fehlerfälle wie beispielsweise ein Schluss einer der Leitungen UB1 oder UB2 nach Masse führen durch entsprechende Spannungsverhältnisse über den beteiligten Feldeffekttransistoren wie vorstehend beschrieben zu einem sofortigen Ausschalten des entsprechenden Schalters im Fehlerzweig.

Durch Dimensionierung der Schaltung ist die Anpassung der Abschaltschwellen möglich. Bei exakt gleichen Verhältnissen können auch beide Strompfade über die Feldeffekttransistoren FET1 und FET2 zu gleichen Teilen stromführend sein.

Es wird angemerkt, dass hierbei aufgrund der Entkopplung des Fehlerzweigs über die in Sperrrichtung betriebene interne Diode des Feldeffekttransistors keine Beeinflussung des intakten Zweigs bzw. Pfads auftritt.

Darüber hinaus ist es möglich, eine gleichartige Redundanz in den Massezuleitungen nach demselben Prinzip wie vorstehend beschrieben zu erzielen. Bei einer Ausgestaltung des Prinzips bezüglich der Massezuleitungen ist ein durch auftretende Spannungsabfälle und/oder Diodenstrecken verursachter Masseversatz bzw. Spannungsversatz des Elektronik-Massepotenzials zu berücksichtigen. Hierdurch können u. a. bei Schnittstellen (z. B. CAN) Probleme resultieren. Des weiteren ist in diesem Fall zu beachten, dass in Kraftfahrzeugen üblicherweise lediglich die die positive Spannung UB (+Ubatt) führenden Zuleitungen, nicht jedoch vorhandene Masseleitungen mittels Schmelzsicherungen abgesichert sind.

Die vorgeschlagene Lösung führt somit zu den folgenden Vorteilen:

(1) Mehrere Stromversorgungszweige sind wirksam entkoppelt.

(2) In den Leistungshalbleitern entsteht durch die Verwendung niederohmiger Halbleiterschalter (MOSFETs) als Schalt- bzw. Entkopplungselemente eine minimale Verlustleistung.

(3) Bei zu hoher Betriebstemperatur wird ein ggf. integrierter Selbstschutz der Halbleiter wirksam.

(4) Es wird eine Strombegrenzungsfunktion realisiert.

(5) Ein Stromfluss in einer nicht vorgesehenen Richtung, d.h. ein Rückstrom aus der elektronischen Steuereinheit heraus, wird erkannt und der betroffene Halbleiterschalter automatisch abgeschaltet.

(6) Die Schaltungsanordnung und ihre Funktion sind zur Sicherstellung der Verfügbarkeit jederzeit prüf- und diagnostizierbar.

(7) Fehlerfälle werden automatisch erkannt. Der Stromzweig, in welchem der Fehler erkannt wurde, wird selbsttätig und ohne eine zusätzliche Steuereinrichtung, wie beispielsweise ein Mikrocontroller mit zusätzlicher Intelligenz, abgeschaltet; es erfolgt somit eine automatische Umschaltung auf den niederohmigsten verfügbaren Stromzweig.

(8) Die Funktionalität der Schaltungsanordnung wird mit einem kleinstmöglichen Bauteileaufwand und somit kostengünstig erzielt.

Strukturelle Implementationen, die zu der detaillierten Beschreibung hierin ähnlich sind, sind nicht als Abweichen von dem Gegenstand der Erfindung wie in den nachfolgenden Patentansprüchen definiert zu werten.

Bezugszeichenliste

| | |
|---|---|
| 1, 2: | Schaltelement |
| 3, 4: | Steuereinrichtung |
| FET1, FET2: | selbstsperrender n-MOSFET (Leistungshalbleiter) |
| D2, D3: | Zenerdiode |
| D4, D5: | Diode |
| T1, T4: | selbstsperrender p-MOSFET |
| T2, T5: | selbstsperrender n-MOSFET |
| T3, T6: | Bipolartransistor |
| R1 - R10: | Widerstand |
| GND: | Massepotenzial |
| UB1, UB2: | Batteriespannung, Eingang |
| UB: | Batteriespannung, Ausgang |
| STAT_UB1, STAT_UB2: | Ausgang Rückmeldung |
| UB1_on, UB2_on: | Eingang Schaltsignal |

**Patentansprüche**

1. Schaltungsanordnung zur redundanten Stromversorgung einer nachgeschalteten Last, mit:

- zumindest einem ersten Strompfad mit einem ersten Schaltelement (1, FET1), an dem eingangsseitig eine erste Spannung (UB1) anliegt;
- zumindest einem zweiten Strompfad mit einem zweiten Schaltelement (3, FET2), an dem eingangsseitig eine zweite Eingangsspannung (UB2) anliegt;
- zumindest einer ersten, mit dem ersten Strompfad verbundenen Steuereinrichtung (2) zur Steuerung des ersten Schaltelements (1, FET1),
- zumindest einer zweiten, mit dem zweiten Strompfad verbundenen Steuereinrichtung (4) zur Steuerung des zweiten Schaltelements (3, FET2); und
- einem gemeinsamen Ausgangsanschluss des ersten und des zweiten Strompfads, an dem eine Lastversorgungsspannung (UB) ausgegeben wird; wobei
- die erste Steuereinrichtung (2) und die zweite Steuereinrichtung (4) aus gleichen und gleich verschalteten Elementen aufgebaut sind und in einem normalen Betriebszustand, in welchem eine Gleichverteilung von Stromanteilen aus dem ersten und dem zweiten Strompfad in die nachgeschaltete Last gegeben ist, die erste Steuereinrichtung (2) über einen ersten Eingang (UB1_on) das erste Schaltelement (1, FET1) in einem Durchlasszustand hält und die zweite Steuereinrichtung (4) über einen ersten Eingang (UB2_on) das zweite Schaltelement (3, FET2) in einem Durchlasszustand hält,
**dadurch gekennzeichnet, dass**
- die erste und die zweite Steuereinrichtung jeweils einen zweiten Eingang (Isense) zum Erfassen eines von dem ersten (1, FET1) bzw. zweiten (3, FET2) Schaltelement erzeugten Stroms aufweist; und
- die erste und die zweite Steuereinrichtung jeweils einen ersten Ausgang (IN) zum Steuern des Schaltzustands des ersten (1, FET1) bzw. zweiten (3, FET2) Schaltelements in Abhängigkeit von dem an dem zweiten Eingang (Isense) erfassten Strom derart aufweist, dass bei Auftreten eines abnormalen Betriebszustands, in welchem die Gleichverteilung des Stromanteils nicht gegeben ist, in Abhängigkeit von elektrischen Eigenschaften des ersten Strompfads oder des zweiten Strompfads und in Abhängigkeit von der Anzahl tatsächlich vorhandener Strompfade diejenige der zumindest einen oder zweiten Steuereinrichtungen (2, 4), die sich in dem niederohmigsten Strompfad befindet, das Schaltelement in diesem Strompfad selbsttätig und eigengesteuert in den Durchlasszustand schaltet, und Schaltelemente, die sich in höherohmigeren Strompfaden befinden, selbsttätig und eigengesteuert in einen Sperrzustand schaltet.

2. Schaltungsanordnung nach Anspruch 1, **dadurch gekennzeichnet, dass** das erste und das zweite Schaltelement (1, 3) ein Leistungshalbleiter ist.

3. Schaltungsanordnung nach Anspruch 2, **dadurch gekennzeichnet, dass** das erste und das zweite Schaltelement (1, 3) ein selbstsperrender MOSFET ist.

4. Schaltungsanordnung nach einem der vorangehenden Ansprüche, **dadurch gekennzeichnet, dass** die erste und die zweite Steuereinrichtung (2, 4) jeweils

   - parallel zu dem ersten (1, FET1) bzw. dem zweiten (3, FET2) Schaltelement angeordnet ist; und
   - einen zweiten Ausgang (STAT_UB1, STAT_UB2) zum Rückmelden des Schaltzustands des ersten (1, FET1) bzw. zweiten (3, FET2) Schaltelements an die Steuereinheit und Erfassen des Schaltzustands durch dieselbe aufweist.

5. Schaltungsanordnung nach Anspruch 4, **dadurch gekennzeichnet, dass** die Steuereinheit ein Mikrocontroller einer elektronischen Steuereinheit des Fahrzeugs ist.

6. Schaltungsanordnung nach Anspruch 1, **dadurch gekennzeichnet, dass** der erste und der zweite Strompfad durch eine in Sperrrichtung betriebene interne Diode jeweils des ersten und des zweiten Schaltelements (1, FET1, 3, FET2) entkoppelt sind.

7. Schaltungsanordnung nach Anspruch 1, **dadurch gekennzeichnet, dass** die elektrischen Eigenschaften die Spannung an dem oder der Innenwiderstand des ersten und des zweiten Strompfad(s) sind, und die schlechteren elektrischen Eigenschaften ein höherer Innenwiderstand oder eine niedrigere Spannung sind.

8. Verfahren zur redundanten Stromversorgung einer nachgeschalteten Last in einer Schaltungsanordnung mit zumindest einem ersten Strompfad mit einem ersten Schaltelement (1, FET1), an dem eingangsseitig eine erste Spannung (UB1) anliegt, zumindest einem zweiten Strompfad mit einem zweiten Schaltelement (3, FET2), an dem eingangsseitig eine zweite Eingangsspannung (UB2) anliegt, zumindest einer ersten, mit dem ersten Strompfad verbundenen Steuereinrichtung (2) zur Steuerung des ersten Schaltelements (1, FET1), zumindest einer zweiten, mit dem zweiten Strompfad verbundenen Steuereinrichtung (4) zur Steuerung des zweiten Schaltelements (3, FET2), wobei die erste Steuereinrichtung (2) und die zweite Steuereinrichtung (4) aus gleichen und gleich verschalteten Elementen aufgebaut sind, und einem gemeinsamen Ausgangsanschluss des ersten und des zweiten Strompfads, an dem eine Lastversorgungsspannung (UB) ausgegeben wird, mit dem Schritt des :

   - in einem normalen Betriebszustand, in welchem eine Gleichverteilung von Stromanteilen aus dem ersten Strompfad und dem zweiten Strompfad in die nachgeschaltete Last gegeben ist, Haltens des ersten Schaltelements (1, FET1) in einem Durchlasszustand mittels der ersten Steuereinrichtung (2) über einen ersten Eingang (UB1_on) derselben und Haltens des zweiten Schaltelements (3, FET2) in einem Durchlasszustand mittels der zweiten Steuereinrichtung (4) über einen ersten Eingang (UB2_on) derselben,
   **gekennzeichnet durch die Schritte des**
   - Erfassens eines von dem ersten (1, FET1) bzw. zweiten (3, FET2) Schaltelement erzeugten Stroms über einen zweiten Eingang (Isense) jeweils der ersten und der zweiten Steuereinrichtung (2, 4); und
   - Steuerns des Schaltzustands des ersten (1, FET1) bzw. zweiten (3, FET2) Schaltelements in Abhängigkeit von dem an dem zweiten Eingang (Isense) erfassten Strom über einen ersten Ausgang (IN) jeweils der ersten und der zweiten Steuereinrichtung (2, 4) derart, dass bei Auftreten eines abnormalen Betriebszustands, in welchem die Gleichverteilung des Stromanteils nicht gegeben ist, in Abhängigkeit von elektrischen Eigenschaften des ersten Strompfads oder des zweiten Strompfads und in Abhängigkeit von der Anzahl tatsächlich vorhandener Strompfade diejenige der zumindest einen oder zweiten Steuereinrichtungen (2, 4), die sich in dem niederohmigsten Strompfad befindet, das Schaltelement in diesem Strompfad selbsttätig und eigengesteuert in den Durchlasszustand schaltet, und Schaltelemente, die sich in höherohmigeren Strompfaden befinden, selbsttätig und eigengesteuert in einen Sperrzustand schaltet.

9. Verfahren nach Anspruch 8, **dadurch gekennzeichnet, dass** der erste und der zweite Strompfad durch eine in Sperrrichtung betriebene interne Diode jeweils des ersten und des zweiten Schaltelements (1, FET1, 3, FET2) entkoppelt werden.

10. Verfahren nach Anspruch 8, **dadurch gekennzeichnet, dass** die elektrischen Eigenschaften die Spannung an dem und der Innenwiderstand des ersten und des zweiten Strompfad(s) sind, und die schlechteren elektrischen Eigenschaften ein höherer Innenwiderstand oder eine niedrigere Spannung sind.

**Claims**

1. Circuit arrangement for the redundant current supply of a load connected downstream, **having:**

> - at least one first current path comprising a first switching element (1, FET1) at which a first voltage (UB1) is present on the input side;
> - at least one second current path comprising a second switching element (3, FET2) at which a second input voltage (UB2) is present on the input side;
> - at least one first control device (2) which is connected to the first current path and serves for controlling the first switching element (1, FET1);
> - at least one second control device (4) which is connected to the second current path and serves for controlling the second switching element (3, FET2); and
> - a common output terminal of the first and second current paths, at which a load supply voltage (UB) is output; wherein
> - the first control device (2) and the second control device (4) are constructed from identical and identically interconnected elements and in a normal operating state, in which a uniform distribution of current portions from the first and second current paths into the downstream load is provided, the first control device (2) holds the first switching element (1, FET1) in a conducting state via a first input (UB1_on) and the second control device (4) holds the second switching element (3, FET2) in a conducting state via a first input (UB2_on),
> **characterized in that**
> - the first and second control device in each case has a second input (Isense) for detecting a current generated by the first (1, FET1) and second (3, FET2) switching element, respectively; and
> - the first and the second control device in each case has a first output (IN) for controlling the switching state of the first (1, FET1) and the second (3, FET2) switching element, respectively, depending on the current detected at the second input (Isense), such that upon the occurrence of an abnormal operating state, in which the uniform distribution of the current portion is not provided, depending on electrical properties of the first current path or of the second current path and depending on the number of current paths actually present, that one of the at least one or second control devices (2, 4) which is situated in the lowest-resistance current path switches the switching element in this current path automatically and in self-controlled fashion into the conducting state, and switches switching elements which are situated in higher-resistance current paths automatically and in self-controlled fashion into a blocking state.

2. Circuit arrangement according to Claim 1, **characterized in that** the first and the second switching element (1, 3) is a power semiconductor.

3. Circuit arrangement according to Claim 2, **characterized in that** the first and the second switching element (1, 3) is a normally off MOSFET.

4. Circuit arrangement according to any of the preceding claims, **characterized in that** the first and the second control device (2, 4) in each case

> - is arranged in parallel with the first (1, FET1) and the second (3, FET2) switching element, respectively; and
> - has a second output (STAT_UB1, STAT_UB2) for the feedback of the switching state of the first (1, FET1) and second (3, FET2) switching element, respectively, to the control unit and detection of the switching state by means of the latter.

5. Circuit arrangement according to Claim 4, **characterized in that** the control unit is a microcontroller of an electronic control unit of the vehicle.

6. Circuit arrangement according to Claim 1, **characterized in that** the first and second current paths are decoupled by an internal diode, operated in the reverse direction, respectively of the first and the second switching element (1, FET1, 3, FET2).

7. Circuit arrangement according to Claim 1, **characterized in that** the electrical properties are the voltage at or the internal resistance of the first and of the second current path, and the poorer electrical properties are a higher internal resistance or a lower voltage.

8. Method for the redundant current supply of a load connected downstream in a circuit arrangement comprising at least one first current path comprising a first switching element (1, FET1) at which a first voltage (UB1) is present on the input side, at least one second current path comprising a second switching element (3, FET2) at which a second input voltage (UB2) is present on the input side, at least one first control device (2) which is connected to the first current path and serves for controlling the first switching element (1, FET1), at least one second control device (4) which is connected to the second current path and serves for controlling the second switching element (3, FET2), wherein the first control device (2) and the second control device (4) are constructed from identical and identically interconnected elements, and a common output terminal of the first and second current paths, at which a load supply voltage (UB) is output, **having** the step of:

- in a normal operating state, in which a uniform distribution of current portions from the first and second current paths into the downstream load is provided holding the first switching element (1, FET1) in a conducting state by means of the first control device (2) via a first input (UB1_on) of the same and holding the second switching element (3, FET2) in a conducting state by means of the second control device (4) via a first input (UB2_on) of the same, **characterized by the steps of**

- detecting a current generated by the first (1, FET1) and second (3, FET2) switching element, respectively, via a second input (Isense) in each case of the first and of the second control device (2, 4); and

- controlling the switching state of the first (1, FET1) and the second (3, FET2) switching element, respectively, depending on the current detected at the second input (Isense) via a first output (IN) in each case of the first and of the second control device (2, 4), such that upon occurrence of an abnormal operating state, in which the uniform distribution of the current portion is not provided, depending on electrical properties of the first current path or of the second current path and depending on the number of current paths actually present, that one of the at least one or second control devices (2, 4) which is situated in that lowest-resistance current path switches the switching element in this current path automatically and in self-controlled fashion into the conducting state, and switches switching elements which are situated in higher-resistance current paths automatically and in self-controlled fashion into a blocking state.

9. Method according to Claim 8, **characterized in that** the first and second current paths are decoupled by an internal diode, operated in the reverse direction, respectively of the first and second switching element (1, FET1, 3, FET2).

10. Method according to Claim 8, **characterized in that** the electrical properties are the voltage at and the internal resistance of the first and of the second current path, and the poorer electrical properties are a higher internal resistance or a lower voltage.

**Revendications**

1. Montage d'alimentation redondante en courant d'une charge en aval, comprenant :

- au moins un premier trajet de courant ayant un premier élément (1, FET1) de commutation, auquel s'applique, du côté de l'entrée, une première tension (UB1) ;
- au moins un deuxième trajet de courant ayant un deuxième élément (3, FET2) de commutation, auquel s'applique, du côté de l'entrée, une deuxième tension (UB2) d'entrée;
- au moins un premier dispositif (2) de commande, relié au premier trajet de courant, pour commander le premier élément (1, FET1) de commutation,
- au moins un deuxième dispositif (4) de commande, relié au deuxième trajet de courant, pour commander le deuxième élément (3, FET2) de commutation et
- une borne de sortie commune du premier et du deuxième trajets de courant, qui donne une tension (UB) d'alimentation de la charge, dans lequel
- le premier dispositif (2) de commande et le deuxième dispositif (4) de commande sont constitués d'éléments pareils et montés pareillement et, dans un état de fonctionnement normal, dans lequel il y a une répartition égale de proportions du courant provenant du premier et du deuxième trajets de courant dans la charge en aval, le premier dispositif (2) de commande maintient, par une première entrée (UB1_on), le premier élément (1, FET1) de commutation dans un état passant et le deuxième dispositif (4) de commande maintient, par une première entrée (UB2_on), le deuxième élément (3, FET2) de commutation dans un état passant,
**caractérisé en ce que**
- le premier et le deuxième dispositif de commande ont chacun une deuxième entrée (Isense) pour détecter un courant produit par le premier (1, FET1) ou le deuxième (3, FET2) élément de commutation et
- le premier et le deuxième dispositifs de commande ont chacun une première sortie (IN) pour commander l'état de commutation du premier (1, FET1) ou du deuxième (3, FET2) élément de commutation en fonction du courant détecté par la deuxième entrée (Isense), de manière à ce que, s'il apparaît un état de fonctionnement anormal, dans lequel il n'y a pas une répartition égale de la proportion du courant, en fonction du nombre de trajets de courant présents effectivement, celui des au moins premier ou deuxième dispositif (2, 4) de courant, qui se trouve dans le trajet de courant de valeur ohmique la plus petite, met, automatiquement et par commande propre, dans l'état passant l'élément de commutation dans ce trajet de courant et met des éléments de commutation, qui se trouvent dans des trajets de courant à valeur ohmique plus grande, automatiquement et par commande propre, dans un état bloqué.

2. Montage suivant la revendication 1, **caractérisé en ce que** le premier et le deuxième éléments (1, 3) de commutation sont des semi-conducteurs de puissance.

3. Montage suivant la revendication 2, **caractérisé en ce que** le premier et le deuxième éléments (1, 3) de commutation est un MOSFET à autoblocage.

4. Montage suivant l'une des revendications précédentes, **caractérisé en ce que** le premier et le deuxième dispositifs (2, 4) de commande

- sont montés chacun en parallèle au premier (1, FET1) ou au deuxième (3, FET2) élément de commutation et
- ont chacun une deuxième sortie (STAT_UB1, STAT_UB2) pour informer, en retour, l'unité de commande de l'état de commutation du premier (1, FET1) ou deuxième (3, FET2) élément de commutation et pour détecter l'état de commutation par celle-ci.

5. Montage suivant la revendication 4, **caractérisé en ce que** l'unité de commande est une micro unité de commande d'une unité électronique de commande du véhicule.

6. Montage suivant la revendication 1, **caractérisé en ce que** le premier et le deuxième trajets de courant sont découplés par une diode interne, fonctionnant dans l'état bloqué, respectivement du premier et du deuxième élément (1, FET1, 3, FET2) de commutation.

7. Montage suivant la revendication 1, **caractérisé en ce que** les propriétés électriques sont la tension aux bornes ou la résistance intérieure du premier et du deuxième trajets de courant et les propriétés électriques plus mauvaises sont une résistance interne plus grande ou une tension plus petite.

8. Procédé d'alimentation redondante en courant d'une charge en aval dans un montage, comprenant au moins un premier trajet de courant ayant un premier élément (1, FET1) de commutation, auquel s'applique, du côté de l'entrée, une première tension (UB1); au moins un deuxième trajet de courant ayant un deuxième élément (3, FET2) de commutation, auquel s'applique, du côté de l'entrée, une deuxième tension (UB2) d'entrée; au moins un premier dispositif (2) de commande, relié au premier trajet de courant, pour commander le premier élément (1, FET1) de commutation, au moins un deuxième dispositif (4) de commande, relié au deuxième trajet de courant, pour commander le deuxième élément (3, FET2) de commutation, le premier dispositif (2) de commande et le deuxième dispositif (4) de commande étant constitués d'éléments pareils et montés pareillement, et une borne de sortie commune du premier et du deuxième trajets de courant, qui donne une tension (UB) d'alimentation de charge comprenant le stade de :

- dans un état de fonctionnement normal, dans lequel il y a une répartition égale de proportions de courant provenant du premier trajet de courant et du deuxième trajet de courant dans la charge en aval, maintien du premier élément (1, FET1) de commutation dans un état passant, au moyen du premier dispositif (2) de commande, par une première entrée (UB1_on) de celui-ci et maintien du deuxième élément (3, FET2) de commutation dans un état passant au moyen du deuxième dispositif (4) de commande, par une première entrée (UB2_on) de celui-ci,
**caractérisé par** les stades de
- détection d'un courant produit par le premier (1, FET1) ou le deuxième (3, FET2) élément de commutation, par une deuxième entrée (Isense), respectivement du premier et du deuxième dispositifs (2, 4) de commande et
- commande de l'état de commutation du premier (1, FET1) ou du deuxième (3, FET2) élément de commutation, en fonction du courant détecté sur la deuxième entrée (Isense), par une première sortie (IN), respectivement du premier et du deuxièmes dispositifs (2, 4) de commande, de manière à ce que, s'il apparaît un état de fonctionnement anormal, dans lequel il n'y a pas une répartition égale de la proportion du courant, en fonction de propriétés électriques du premier trajet du courant ou du deuxième trajet du courant et en fonction du nombre de trajets de courant présents effectivement, celui des au moins un ou deuxième dispositif (2, 4) de commande, qui se trouve dans le trajet de courant à valeur ohmique la plus petite, met, automatiquement et par commande propre, l'élément de commutation dans ce trajet de courant dans l'état passant et met, automatique et par commande propre, dans un état bloqué des éléments de commutation, qui se trouvent dans des trajets de courant à valeur ohmique plus grande.

9. Procédé suivant la revendication 8, **caractérisé en ce que** le premier et le deuxième trajets de courant sont découplés respectivement du premier et du deuxième éléments (1, FET1, 3, FET2) de commutation par une diode interne fonctionnant dans l'état bloqué.

10. Procédé suivant la revendication 8, **caractérisé en ce que** les propriétés électriques sont la tension aux bornes et la résistance interne du premier et du deuxième trajets de courant et les propriétés électriques plus mauvaises sont les résistances internes plus grandes ou une tension plus basse.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

• **SHI et al.** Integrated power systems with fault tolerant attributes. *APEC'97*